# EUROPEAN PATENT APPLICATION

(11) **EP 4 757 465 A1**
(43) Date of publication of application: **10.06.2026**
(21) Application number: 24847845.5
(22) Date of filing: 20.06.2024
(51) Int. Cl.: H04W 72/21

(54) **INFORMATION SENDING METHOD, INFORMATION RECEIVING METHOD, NETWORK DEVICE, TERMINAL, APPARATUS AND STORAGE MEDIUM**

(30) Priority: 28.07.2023 CN 202310940845
(71) Applicant: Datang Mobile Communications Equipment Co., Ltd., Beijing 100085 (CN)
(72) Inventor: ZHAO, Yali, Beijing 100085 (CN); BERTRAND, Pierre, Beijing 100085 (CN); CHEN, Li, Beijing 100085 (CN)
(74) Representative: Studio Torta S.p.A.
(86) International application number: PCT/CN2024/100301
(87) International publication number: WO 2025/025882

(57) **Abstract**

The embodiments of the present disclosure belong to the technical field of communications. Disclosed are an information sending method, an information receiving method, a network device, a terminal, an apparatus and a storage medium. The information sending method comprises: sending assistance information to a network device, wherein the assistance information comprises first information and/or second information; the first information is a packet data unit set (PDU Set) error rate (PSER) of a target object in the uplink transmission direction; the second information is information configured to determine the PSER of the target object in the uplink transmission direction; and the target object is a terminal, a QoS flow of the terminal, a radio bearer (RB) of the terminal or a logical channel of the terminal.

## Description

### CROSS-REFERENCE TO RELATED APPLICATION

The present disclosure claims priority to the Chinese Patent Application No. 202310940845.8 entitled " Information Sending Method, Information Receiving Method, Network Device, Terminal, Apparatus And Storage Medium " filed on July 28, 2023 before CNIPA, the disclosures of which are incorporated into the present disclosure by reference in its entirety.

### TECHNICAL FIELD

The present disclosure relates to the field of mobile communication technologies, and in particular, to an information sending method, an information receiving method, a network device, a terminal, an apparatus, and a storage medium.

### BACKGROUND

Extended Reality (XR) and Cloud Game (CG) are among the most important media applications of the 5th-Generation (5G) mobile communication, having requirements of low latency, high throughput, and high reliability, and requiring transmission of large amounts of data in a short time. XR is a general term for different types of reality, referring to all real-virtual combined environments and human-computer interactions generated by computer technologies and devices. It includes representative forms such as Augmented Reality (AR), Mixed Reality (MR), and Virtual Reality (VR).

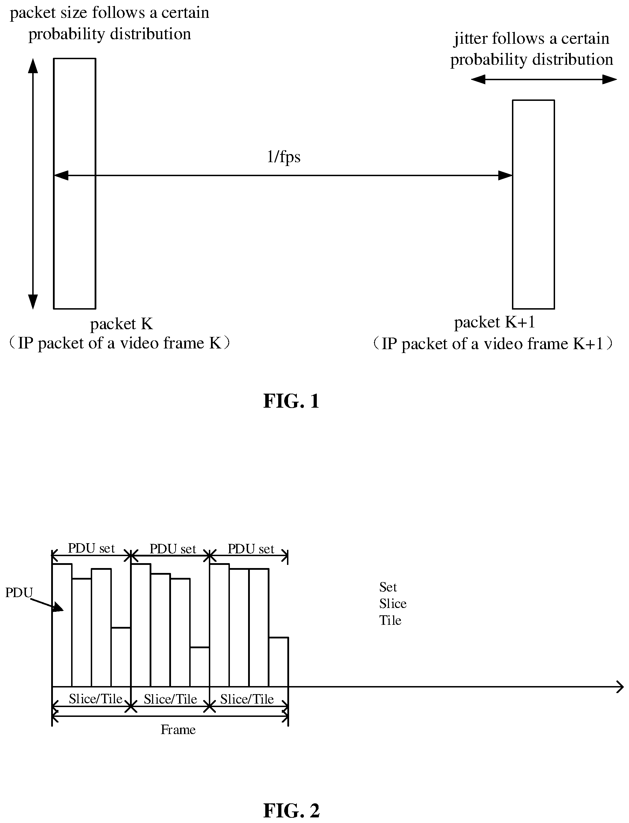

A data frame modeling method for XR services is shown in FIG. 1. For example, each data frame may correspond to one XR video frame, a single data frame may be divided into one or more Packet Data Unit Sets (PDU Set), and one PDU Set contains multiple PDUs (as shown in FIG. 2). In the embodiments of the present disclosure, a data frame is equivalent to a data burst.

Some characteristics of the XR service are as follows:
a video frame period has several options: 15/30/60/90/80 frames per second (fps), corresponding to periods of 66.6/33.3/16.66/8.87 ms respectively;
a frame arrival time has unpredictable jitter;
latency requirement: 10 ms or a range of 7-15 ms;
a bit rate: 10-200 Mbps;
PDU Set Quality of Service (QoS) parameters which generally include: a PDU Set Error Rate (PSER); a PDU Set Delay Budget (PSDB); a PDU Set Integrated Indication (PSII).

For the XR service, the network device cannot obtain information about the uplink PDU Set, so that the uplink PSER cannot be counted.

### SUMMARY

Embodiments of the present disclosure provide an information sending method, an information receiving method, a network device, a terminal, an apparatus, and a storage medium. The PSER of an uplink PDU Set can be provided to a network device by using assistance information, or information for calculating the PSER can be provided to the network device by using assistance information.

**In** a first aspect, an information sending method is provided in the embodiments of the present disclosure. The method includes: sending assistance information to a network device, wherein the assistance information includes first information and/or second information, the first information is an error rate (PSER) of a packet data unit set (PDU Set) of a target object in the uplink transmission direction, and the second information is information used to determine the PSER of the target object in the uplink transmission direction, wherein the target object is the terminal, a quality of service (QoS) flow of the terminal, a radio bearer (RB) of the terminal, or a logical channel of the terminal.

Optionally, the second information includes first sub-information and/or second sub-information; wherein the first sub-information includes at least one of the following information: a first quantity of PDU Sets received from a higher layer and belonging to the target object, or a second quantity of PDU Sets to be sent by the target object in the uplink transmission direction; the second sub-information includes at least one of the following information: a third quantity of PDU Sets that are not successfully transmitted by the target object in the uplink transmission direction, sequence numbers of the PDU Sets that are not successfully transmitted by the target object in the uplink transmission direction, sequence numbers of a Packet Data Convergence Protocol (PDCP) PDU that is not successfully transmitted by the target object in the uplink transmission direction, and identification information of whether the PDCP PDU belongs to a PDU Set.

Optionally, the PDU Sets that are not successfully transmitted by the target object in the uplink transmission direction include at least one of the following: a PDU Set discarded due to expiration of a PDCP discard timer or expiration of a PDCP Set discard timer; or a PDU set that discarded due to transmission failure caused by a channel quality reason.

Optionally, before sending the assistance information to the network device, the method further includes: detecting whether a trigger condition of reporting the assistance information is satisfied; in a case that the trigger condition of reporting the assistance information is met, sending the assistance information to the network device; the trigger condition of reporting the assistance information includes at least one of the following: a periodic trigger and an event trigger.

Optionally, an event in the event trigger includes at least one of a first event and a second event; the first event is that the quantity of PDU Sets that are not successfully transmitted by the target object in the uplink transmission direction reaches a first threshold; the second event is that any PDU Set of the target object in the uplink transmission direction is not successfully transmitted.

Optionally, sending the assistance information to the network device includes: sending the assistance information to the network device through UE assistance information (UAI) message and/or a PDCP control PDU.

Optionally, the assistance information further includes third information, and the third information includes at least one of the following: a packet error rate (PER) of the target object in the uplink transmission direction; a fourth quantity of PDCP PDUs to be sent by the target object in the uplink transmission direction; a reason why the target object fails to successfully transmit the PDCP PDU in the uplink transmission direction, wherein the reason includes at least one of the following: that the PDCP PDU has been transmitted but transmission fails; that expiration of a PDCP discard timer corresponding to another PDU in the PDU set to which the PDCP PDU belongs causes the PDCP PDU to be discarded; that expiration of a PDCP Set discard timer corresponding to the PDU set to which the PDCP PDU belongs causes the PDCP PDU to be discarded.

Optionally, the assistance information is data collected for the target object in a preset time period.

Optionally, the method further includes: receiving first configuration information sent by a network device, and determining the preset time period based on the first configuration information; or, determining the preset time period according to pre-configuration information or a protocol specification.

**In** a second aspect, an information receiving method is provided in the embodiments of the present disclosure. The method includes: receiving assistance information sent by a terminal, wherein the assistance information includes first information and/or second information, the first information is an error rate (PSER) of a PDU Set of a target object in the uplink transmission direction, and the second information is information used to determine the PSER of the target object in the uplink transmission direction, wherein the target object is a terminal, a quality of service (QoS) flow of the terminal, a radio bearer (RB) of the terminal, or a logical channel (LCH) of the terminal.

Optionally, the second information includes first sub-information and/or second sub-information; wherein the first sub-information includes at least one of the following information: a first quantity of PDU Sets received by the terminal from a higher layer and belonging to the target object, or a second quantity of PDU Sets to be sent by the target object in the uplink transmission direction; the second sub-information includes at least one of the following information: a third quantity of PDU Sets that are not successfully transmitted by the target object in the uplink transmission direction, sequence numbers of the PDU Sets that are not successfully transmitted by the target object in the uplink transmission direction, a sequence number of a PDCP PDU that is not successfully transmitted by the target object in the uplink transmission direction, and identification information of whether the PDCP PDU belongs to a PDU Set.

Optionally, the PDU Sets that are not successfully transmitted by the target object in the uplink transmission direction includes at least one of the following: a PDU Set discarded due to expiration of a PDCP discard timer or expiration of a PDCP PDU Set discard timer; or a PDU Set discarded due to transmission failure caused by a channel quality reason.

Optionally, in a case that the assistance information includes the second information, the method further includes: determining the PSER of the target object in the uplink transmission direction according to the second information.

Optionally, determining the PSER of the target object in the uplink transmission direction according to the second information includes: obtaining, based on the first sub-information, a first quantity of PDU Sets received by the terminal from a higher layer and belonging to the target object or a second quantity of PDU Sets to be sent by the target object in the uplink transmission direction; obtaining, based on the second sub-information, a third quantity of PDU Sets that are not successfully transmitted by the target object in the uplink transmission direction; and determining a ratio of the third quantity to the first quantity as the PSER of the target object in the uplink transmission direction, or determining a ratio of the third quantity to the second quantity as the PSER of the target object in the uplink transmission direction.

Optionally, receiving the assistance information sent by the terminal includes: receiving a UAI message and/or a PDCP control PDU sent by the terminal, wherein the UAI message and/or the PDCP control PDU carries the assistance information.

Optionally, the assistance information further includes third information, and the third information includes at least one of the following: a packet error rate PER of the target object in the uplink transmission direction; a fourth quantity of PDCP PDUs to be sent by the target object in the uplink transmission direction; the reason why the target object fails to successfully transmit the PDCP PDU in the uplink transmission direction includes at least one of the following: that the PDCP PDU has been transmitted but transmission fails; that expiration of a PDCP discard timer corresponding to another PDU in a PDU set to which the PDCP PDU belongs causes the PDCP PDU to be discarded; that expiration of a PDCP Set discard timer corresponding to the PDU set to which the PDCP PDU belongs causes the PDCP PDU to be discarded.

Optionally, the method further includes: obtaining, based on the third information, a fourth quantity of PDCP PDUs to be sent by the target object in the uplink transmission direction, and a fifth quantity of PDCP PDUs that have been transmitted but the transmission fails; determine the ratio of the fifth quantity to the fourth quantity as the PER of the target object in the uplink transmission direction.

Optionally, the method further includes: adjusting a reordering window of a Radio Link Control (RLC) entity corresponding to the target object according to the assistance information.

Optionally, the assistance information is data collected by the terminal for the target object within a preset time period.

Optionally, the method further includes: sending first configuration information to the terminal, wherein the first configuration information is used to configure the preset time period.

**In** a third aspect, a terminal is provided in the embodiments of the present disclosure. The terminal includes a memory, a transceiver, and a processor, wherein the memory is configured to store a computer program; the transceiver is configured to send and receive data under control of the processor; and the processor is configured to read the computer program in the memory and perform the following operations: sending assistance information to a network device by using a transceiver, wherein the assistance information includes first information and/or second information, the first information is an error rate (PSER) of a packet data unit set (PDU Set) of a target object in an uplink transmission direction, and the second information is information used to determine the PSER of the target object in the uplink transmission direction; and the target object is the terminal, a quality of service (QoS) flow of the terminal, a radio bearer (RB) of the terminal, or a logical channel of the terminal.

Optionally, the second information includes first sub-information and/or second sub-information; wherein the first sub-information includes at least one of the following information: a first quantity of PDU Sets received from a higher layer and belonging to the target object, or a second quantity of PDU Sets to be sent by the target object in the uplink transmission direction; the second sub-information includes at least one of the following information: a third quantity of PDU Sets that are not successfully transmitted by the target object in the uplink transmission direction, sequence numbers of the PDU Sets that are not successfully transmitted by the target object in the uplink transmission direction, a sequence number of a PDCP PDU that is not successfully transmitted by the target object in the uplink transmission direction, and identification information of whether the PDCP PDU belongs to a PDU Set.

Optionally, the PDU Sets that are not successfully transmitted by the target object in the uplink transmission direction includes at least one of the following: a PDU Set discarded due to expiration of a PDCP discard timer or expiration of a PDCP Set discard timer; a PDU Set discarded due to transmission failure caused by a channel quality reason.

Optionally, the processor further reads the computer program in the memory and performs the following operations: before sending the assistance information to the network device, detecting whether a trigger condition of reporting the assistance information is satisfied; and in a case that the trigger condition of reporting the assistance information is satisfied, sending the assistance information to the network device; wherein the trigger condition of reporting the assistance information includes at least one of the following: a periodic trigger and an event trigger.

Optionally, an event in the event trigger includes at least one of a first event and a second event; the first event is that a quantity of PDU Sets that are not successfully transmitted by the target object in the uplink transmission direction reaches a first threshold; the second event is that any PDU Set of the target object in the uplink transmission direction is not successfully transmitted.

Optionally, the processor further reads the computer program in the memory and performs the following operations: sending the assistance information to the network device through UE assistance information (UAI) message and/or a packet data convergence protocol PDCP control PDU.

Optionally, the assistance information further includes third information, and the third information includes at least one of the following: a packet error rate (PER) of the target object in the uplink transmission direction; a fourth quantity of PDCP PDUs to be sent by the target object in the uplink transmission direction; a reason why the target object fails to successfully transmit the PDCP PDU in the uplink transmission direction, wherein the reason includes at least one of the following:
that the PDCP PDU has been transmitted but transmission fails; that expiration of a PDCP discard timer corresponding to another PDU in a PDU set to which the PDCP PDU belongs causes the PDCP PDU to be discarded; that expiration of a PDCP Set discard timer corresponding to the PDU set to which the PDCP PDU belongs causes the PDCP PDU to be discarded.

Optionally, the assistance information is data collected for the target object in a preset time period.

Optionally, the processor further reads the computer program in the memory and performs the following operations: receiving, by a transceiver, first configuration information sent by a network device, and determining the preset time period based on the first configuration information; or, determining the preset time period according to pre-configuration information or a protocol specification.

**In** a fourth aspect, a network device is provided in the embodiments of the present disclosure. The network device includes a memory, a transceiver, and a processor, wherein the memory is configured to store a computer program; the transceiver is configured to send and receive data under control of the processor; the processor is configured to read the computer program in the memory and perform the following operations:
receiving, by the transceiver, assistance information sent by a terminal, wherein the assistance information includes first information and/or second information, the first information is an error rate (PSER) of a PDU Set of a target object in an uplink transmission direction, and the second information is information used to determine the PSER of the target object in the uplink transmission direction, wherein the target object is the terminal, a quality of service (QoS) flow of the terminal, a radio bearer (RB) of the terminal, or a logical channel of the terminal.

Optionally, the second information includes first sub-information and/or second sub-information; wherein the first sub-information includes at least one of the following information: a first quantity of PDU Sets received by the terminal from a higher layer and belonging to the target object, or a second quantity of PDU Sets to be sent by the target object in the uplink transmission direction; the second sub-information includes at least one of the following information: a third quantity of PDU Sets that are not successfully transmitted by the target object in the uplink transmission direction, sequence numbers of the PDU Sets that are not successfully transmitted by the target object in the uplink transmission direction, a sequence number of a PDCP PDU that is not successfully transmitted by the target object in the uplink transmission direction, and identification information of whether the PDCP PDU belongs to a PDU Set.

Optionally, the PDU Sets that are not successfully transmitted by the target object in the uplink transmission direction includes at least one of the following: a PDU Set discarded due to expiration of a PDCP discard timer or expiration of a PDCP PDU Set discard timer; a PDU Set discarded due to transmission failure caused by a channel quality reason.

Optionally, in a case that the assistance information includes the second information, the processor further reads the computer program in the memory and performs the following operations: determining the PSER of the target object in the uplink transmission direction according to the second information.

Optionally, the processor further reads the computer program in the memory and performs the following operations: obtaining, based on the first sub-information, a first quantity of PDU Sets received by the terminal from a higher layer and belonging to the target object or a second quantity of PDU Sets to be sent by the target object in the uplink transmission direction; obtaining, based on the second sub-information, a third quantity of PDU Sets that are not successfully transmitted by the target object in the uplink transmission direction; determining a ratio of the third quantity to the first quantity as the PSER of the target object in the uplink transmission direction, or determining a ratio of the third quantity to the second quantity as the PSER of the target object in the uplink transmission direction.

Optionally, the processor further reads the computer program in the memory and performs the following operations: receiving a UAI message and/or a PDCP control PDU sent by the terminal, wherein the UAI message and/or the PDCP control PDU carries the assistance information.

Optionally, the assistance information further includes third information, and the third information includes at least one of the following: a packet error rate (PER) of the target object in the uplink transmission direction; a fourth quantity of PDCP PDUs to be sent by the target object in the uplink transmission direction; a reason why the target object fails to successfully transmit the PDCP PDU in the uplink transmission direction, wherein the reason includes at least one of the following: that the PDCP PDU has been transmitted but transmission fails; that expiration of a PDCP discard timer corresponding to another PDU in a PDU set to which the PDCP PDU belongs causes the PDCP PDU to be discarded; that expiration of a PDCP Set discard timer corresponding to the PDU set to which the PDCP PDU belongs causes the PDCP PDU to be discarded.

Optionally, the processor further reads the computer program in the memory and performs the following operations: obtaining, based on the third information, a fourth quantity of PDCP PDUs to be sent by the target object in the uplink transmission direction, or a fifth quantity of PDCP PDUs that have been transmitted but failed to be transmitted; and determining a ratio of the fifth quantity to the fourth quantity as the PER of the target object in the uplink transmission direction.

Optionally, the processor further reads the computer program in the memory and performs the following operations: adjusting a reordering window of a RLC entity corresponding to the target object according to the assistance information.

Optionally, the assistance information is data collected by the terminal for the target object within a preset time period.

Optionally, the processor further reads the computer program in the memory and performs the following operations: sending first configuration information to the terminal, wherein the first configuration information is used to configure the preset time period.

In a fifth aspect, an information sending apparatus applied to a terminal is provided in the embodiments of the present disclosure. The apparatus includes: a first sending unit, configured to send assistance information to a network device, wherein the assistance information includes first information and/or second information, the first information is an error rate (PSER) of a packet data unit set (PDU Set) of a target object in an uplink transmission direction, and the second information is information used to determine the (PSER) of the target object in the uplink transmission direction; and the target object is the terminal, a quality of service (QoS) flow of the terminal, a radio bearer (RB) of the terminal, or a logical channel of the terminal.

In a sixth aspect, an information receiving apparatus applied to a network device is provided in the embodiments of the present disclosure. The apparatus includes: a first receiving unit, configured to receive assistance information sent by a terminal, wherein the assistance information includes first information and/or second information, the first information is an error rate (PSER) of a PDU Set of a target object in an uplink transmission direction, the second information is information used to determine the PSER of the target object in the uplink transmission direction, wherein the target object is the terminal, a quality of service (QoS) flow of the terminal, a radio bearer (RB) of the terminal, or a logical channel of the terminal.

In a seventh aspect, a computer-readable storage medium is provided., wherein the computer-readable storage medium stores a computer program, and when the computer program is executed by a processor, the steps of the information sending method or the steps of the information receiving method according to the above.

In this embodiment of the present disclosure, the terminal sends the assistance information to the network device, where the assistance information is used to indicate the PDU Set that the terminal fails to transmit in the uplink transmission direction and/or the PSER determined by the terminal, so that the network device may be assisted to adjust the reordering window and/or determine the PSER/PER.

### BRIEF DESCRIPTION OF THE DRAWINGS

FIG. 1 is a schematic diagram of data frame modeling of an XR service in the related art;
FIG. 2 is a schematic diagram of a PDU Set and a PDU of an XR service in the related art;
FIG. 3 is a schematic diagram of an information sending method according to some embodiments of the present disclosure;
FIG. 4 is a schematic diagram of an information receiving method according to some embodiments of the present disclosure;
FIG. 5 is an example diagram of a structure of a PDCP control PDU according to some embodiments of the present disclosure;
FIG. 6 is another schematic structural diagram of a PDCP control PDU according to some embodiments of the present disclosure;
FIG. 7 is a structural diagram of an information sending apparatus according to some embodiments of the present disclosure;
FIG. 8 is a structural diagram of an information receiving apparatus according to some embodiments of the present disclosure;
FIG. 9 is a structural diagram of a terminal according to some embodiments of the present disclosure;
FIG. 10 is a structural diagram of a network device according to some embodiments of the present disclosure.

### DETAILED DESCRIPTION

In the embodiments of the present disclosure, the term "and/or" describes an association relationship between associated objects, indicating that there may be three relationships, for example, "A and/or B" may indicate that A exists alone, both A and B exist, and B exists alone. The character "/" generally indicates an "or" relationship between associated objects.

**In** the embodiments of the present disclosure, the term "a plurality of" means two or more, and other quantifiers are similar thereto.

The technical solutions in the embodiments of the present disclosure will be clearly and completely described below with reference to the accompanying drawings in the embodiments of the present disclosure. Obviously, the described embodiments are only a part of the embodiments of the present disclosure, and are not all of the embodiments. All other embodiments obtained by a person of ordinary skill in the art based on the embodiments of the present disclosure without creative efforts shall fall within the protection scope of the present disclosure.

**In** the embodiments of the present disclosure, the terminal sends the assistance information to the network, so that the network can directly obtain the PSER of the uplink PDU Set or calculate the PSER of the uplink PDU Set based on the assistance information.

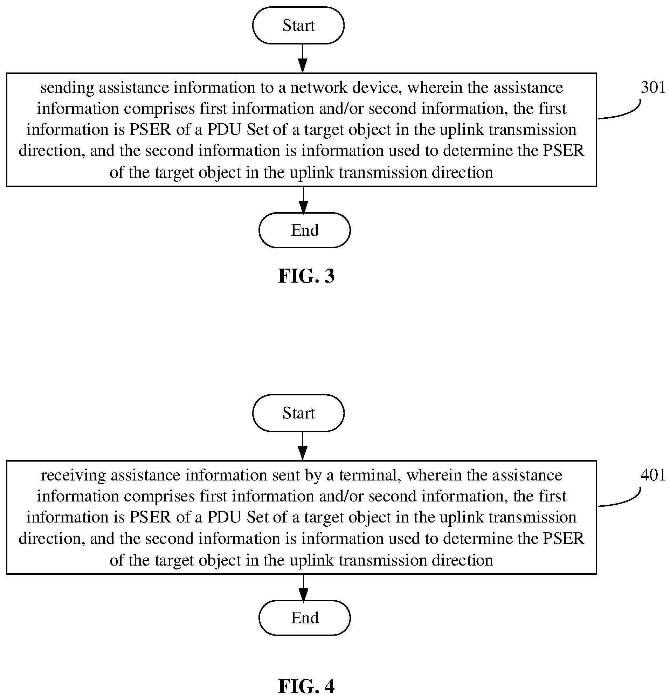

As shown in FIG. 3, an information sending method provided by an embodiment of the present disclosure is applied to a terminal, and includes following steps.

step 301: sending assistance information to a network device, where the assistance information includes first information and/or second information, the first information is a PSER of a PDU Set of a target object in the uplink transmission direction, and the second information is information used to determine a PSER of a target object in the uplink transmission direction; and the target object is the terminal, or a quality of service flow (QoS flow) of the terminal, or a radio bearer (RB) of the terminal, or a logical channel (LCH) of the terminal.

Here, the terminal sends the assistance information to the network device, and when the assistance information includes the first information, the network device may directly obtain the PSER of the PDU Set of the target object in the uplink transmission direction from the assistance information; and when the assistance information includes the second information, the network device may calculate, according to the second information, the PSER of the PDU Set of the target object in the uplink transmission direction.

Specifically, the second information may include first sub-information and/or second sub-information, where the first sub-information includes at least one of the following information: a first quantity of PDU Sets received from a higher layer and belonging to the target object; and a second quantity of PDU Sets to be sent by the target object in the uplink transmission direction. Here, the higher layer may be a related protocol layer of a core network, for example, an Internet Protocol (IP) layer.

The second sub-information includes at least one of the following information: a third quantity of PDU Sets that are not successfully transmitted by the target object in the uplink transmission direction, sequence numbers of the PDU Sets that are not successfully transmitted by the target object in the uplink transmission direction, a sequence number of a packet data convergence protocol (PDCP) PDU that is not successfully transmitted by the target object in the uplink transmission direction, and identification information of whether the PDCP PDU belongs to one PDU Set.

In a case that the second sub-information includes the sequence numbers of the PDU Sets that are not successfully transmitted by the target object in the uplink transmission direction, the network device may count, based on the sequence numbers of the unsuccessfully transmitted PDU Sets, the number of PDU Sets that are not successfully transmitted by the target object in the uplink transmission direction.

Similarly, when the second sub-information includes the sequence numbers of the PDCP PDUs that are not successfully transmitted by the target object in the uplink transmission direction and the identification information of whether the PDCP PDU belongs to one PDU Set, the network device may count, based on the sequence numbers of the PDCP PDU that is not successfully transmitted in the uplink transmission direction and the identification information of whether the PDCP PDU belongs to one PDU Set, each PDU Set that has not been successfully transmitted, so as to obtain the number of PDU Sets that are not successfully transmitted by the target object in the uplink transmission direction.

In this embodiment of the present disclosure, the terminal obtains, according to the PDU Sets or the PDCP PDUs that are not successfully transmitted in the uplink transmission direction based on the counted target objects, the number of PDU Sets that have not been successfully transmitted, or records the sequence numbers of the PDU Sets that have not been successfully transmitted, or records the sequence numbers of the PDCP PDUs that have not been successfully transmitted and the identification information of whether the PDCP PDU belongs to one PDU Set.

Specifically, the PDU sets that are not successfully transmitted by the target object in the uplink transmission direction may include at least one of the following:
(1) a PDU Set discarded due to expiration of a PDCP discard timer or expiration of a PDCP Set discard timer. Herein, when the PDCP discard timer expires, the terminal discards the corresponding PDCP PDU, resulting that the PDU set transmission to which the PDCP PDU belongs fails. When the PDCP Set discard timer expires, the terminal discards the corresponding PDCP Set, resulting in failure of the PDU set transmission.
(2) a PDU Set discarded due to transmission failure caused by a channel quality reason. Here, due to the channel quality difference and other reasons, the data transmission may fail, resulting in the related PDU Set being discarded.

In this embodiment of the present disclosure, the terminal may enable the assistance information to be carried by a UE Assistance Information (UAI) message and/or a Packet Data Convergence Protocol (PDCP) control PDU. That is, the terminal may send the assistance information to the network device through the UAI message and/or the PDCP control PDU. When the assistance information is sent through the UAI message and the PDCP control PDU, a part of the information in the assistance information may be carried in the UAI message, and the other part of the information is carried in the PDCP control PDU. For example, the first information is carried in a UAI message, and the second information is carried in a PDCP control PDU; for another example, the first sub-information is carried in a UAI message, and the second sub-information is carried in a PDCP control PDU.

In this embodiment of the present disclosure, in a case that the trigger condition of reporting the assistance information is satisfied, the terminal may perform the foregoing step 301. Before step 301, the network device may further detect whether the trigger condition of reporting the assistance information is satisfied; and in a case that the trigger condition of reporting the assistance information is met, perform the step 301, and send assistance information to the network device. Here, the trigger condition of reporting the assistance information includes at least one of the following: a periodic trigger and an event trigger.

The periodic trigger is to trigger transmission of the assistance information according to a preset period, for example, sending once every preset time. An event trigger is an event-based trigger. the event in the event trigger includes at least one of a first event and a second event.
(1) The first event is that a quantity of PDU Sets that are not successfully transmitted by the target object in the uplink transmission direction reaches a first threshold. Here, the first threshold may be a threshold set by the terminal, or may be a threshold configured for the terminal by the network device, and a specific value of the threshold may be set according to requirements such as data transmission performance of the target object, which is not specifically limited in the embodiments of the present disclosure.
(2) The second event is that any PDU Set of the target object in the uplink transmission direction is not successfully transmitted. Here, the second event means that the assistance information sending process of step 301 is triggered as long as a certain PDU Set in the uplink transmission direction of the target object is not successfully transmitted.

**In** order to provide a packet error rate (PER) of the target object in the uplink transmission direction to a network device, the assistance information sent by the terminal may further include third information, where the third information includes at least one of the following:
(1) PER of the target object in the uplink transmission direction;
(2) a fourth quantity of PDCP PDUs to be sent by the target object in the uplink transmission direction;
(3) a cause of unsuccessful transmission of a PDCP PDU that is not successfully transmitted by the target object in the uplink transmission direction, where the cause includes at least one of the following:
   the PDCP PDU has been transmitted but transmission fails;
   expiration of a PDCP discard timer corresponding to another PDU in a PDU set to which the PDCP PDU belongs causes the PDCP PDU to be discarded;
   expiration of a PDCP Set discard timer corresponding to the PDU set to which the PDCP PDU belongs causes the PDCP PDU to be discarded.

Here, the terminal may enable the PER of the target object in the uplink transmission direction to be carried in the assistance information, or may send the foregoing (2) and (3) items, so that the network device may calculate the PER of the target object in the uplink transmission direction based on the (2) and (3) items.

**In** addition, in this embodiment of the present disclosure, the assistance information sent by the terminal may be data collected by the terminal for the target object within a preset time period, for example, the first information may be a PSER of a PDU Set of the target object in the uplink transmission direction within the preset time period; the first sub-information may include at least one of the following information: a first quantity of PDU Sets received from a higher layer in the preset time period and belonging to the PDU Set of the target object; a second quantity of PDU Sets to be sent by the target object in the uplink transmission direction within the preset time period; and the second sub-information may include at least one of the following information: a third quantity of PDU Sets that are not successfully transmitted by the target object in the uplink transmission direction within the preset time period; and sequence numbers of the PDU Sets that are not successfully transmitted by the target object in the uplink transmission direction within the preset time period, a sequence number of a PDCP PDU that is not successfully transmitted by the target object in the uplink transmission direction within the preset time period, and identification information of whether the PDCP PDU belongs to one PDU Set.

The preset time period is a time period of a preset length, and the terminal may determine the preset time period based on pre-configured information or a protocol agreement. Certainly, the preset time period may alternatively be configured by the network device. In this case, the terminal may receive the first configuration information sent by the network device, and determine the preset time period based on the first configuration information.

Optionally, in this embodiment of the present disclosure, the sending, by the terminal, the assistance information may specifically include: sending, by the terminal, the first sub-information in the assistance information to a network device based on a periodic trigger, where the first sub-information is carried by a UAI message, and a periodicity of the periodic trigger is the preset time period; and in addition, based on the second event in the event trigger, sequence numbers of the PDU Sets that are not successfully transmitted by the target object in the uplink transmission direction is sent to a network device by using a PDCP control PDU, or a sequence number of a PDCP PDU that is not successfully transmitted by the target object in the uplink transmission direction and identification information of whether the PDCP PDU belongs to one PDU Set.

In this way, the network device may obtain, based on the first sub-information received last time, a first quantity of PDU Sets received by the terminal from a higher layer in a latest preset time period and belonging to the target object, or a second quantity of PDU Sets to be sent by the target object in the uplink transmission direction; or count a third quantity of PDU Sets that are not successfully transmitted by the target object in the uplink transmission direction according to the PDCP control PDU received in a latest preset time period; and then determine a ratio of the third quantity to the first quantity as a PSER of the target object in the uplink transmission direction, or determine a ratio of the third quantity to the second quantity as a PSER of the target object in the uplink transmission direction. Herein, the latest preset time period refers to a time period from a first time to a second time, the second time is a receiving time of the first sub-information received last time, and the first time is before the second time and is spaced apart from the second time by the preset time period.

Referring to FIG. 4, an information receiving method provided by an embodiment of the present disclosure is applied to a network device and includes following steps.

Step 401: receiving assistance information sent by a terminal, where the assistance information includes first information and/or second information, the first information is a PSER of a PDU Set of a target object in the uplink transmission direction, and the second information is information used to determine a PSER of a target object in the uplink transmission direction, where the target object is the terminal, or a QoS flow of the terminal, or a radio bearer RB of the terminal, or a logical channel LCH of the terminal.

Specifically, the network device may receive the UAI message and/or the PDCP control PDU sent by the terminal, where the UAI message and/or the PDCP control PDU carries the assistance information, so that the network device may obtain the assistance information from the UAI message and/or the PDCP control PDU.

Optionally, the second information includes first sub-information and/or second sub-information, where the first sub-information includes at least one of the following information: a first quantity of PDU Sets received by the terminal from a higher layer and belonging to the target object, and a second quantity of PDU Sets to be sent by the target object in the uplink transmission direction.

The second sub-information includes at least one of the following information: a third quantity of PDU Sets that are not successfully transmitted by the target object in the uplink transmission direction, sequence numbers of the PDU Sets that are not successfully transmitted by the target object in the uplink transmission direction, a sequence number of a PDCP PDU that is not successfully transmitted by the target object in the uplink transmission direction, and identification information of whether the PDCP PDU belongs to one PDU Set.

Here, the PDU Set that is not successfully transmitted by the target object in the uplink transmission direction includes at least one of the following: a PDU Set that is discarded due to expiration of a PDCP discard timer or expiration of a PDCP PDU Set discard timer; and a PDU Set discarded due to transmission failure caused by a channel quality reason.

Through the above steps, the network device in the embodiments of the present disclosure may obtain the PSER of the target object on the terminal side in the uplink transmission direction based on the assistance information, thereby realizing the reporting of the PSER.

For example, when the assistance information includes the second information, the network device may determine the PSER of the target object in the uplink transmission direction according to the second information.

Specifically, the network device may obtain, based on the first sub-information, a first quantity of PDU Sets received by the terminal from a higher layer and belonging to the target object or a second quantity of PDU Sets to be sent by the target object in the uplink transmission direction; and obtain a third quantity of PDU Sets that are not successfully transmitted by the target object in the uplink transmission direction according to the second sub-information; and then determine a ratio of the third quantity to the first quantity as a PSER of the target object in the uplink transmission direction, or determine a ratio of the third quantity to the second quantity as a PSER of the target object in the uplink transmission direction.

After step 401, the network device may adjust a reordering window of a corresponding radio link control (RLC) entity of the target object based on the assistance information. For example, a reordering window of an RLC entity of the target object is adjusted according to the PSER, for example, a lower boundary of a reordering window is updated.

Optionally, in this embodiment of the present disclosure, the assistance information may further include third information, where the third information includes at least one of the following: a packet error rate PER of the target object in the uplink transmission direction; a fourth quantity of PDCP PDUs to be sent by the target object in the uplink transmission direction; the reason why the target object fails to successfully transmit the PDCP PDU in the uplink transmission direction. The reason includes at least one of the following: the PDCP PDU has been transmitted but transmission fails; expiration of a PDCP discard timer corresponding to another PDU in a PDU set to which the PDCP PDU belongs causes the PDCP PDU to be discarded; expiration of a PDCP Set discard timer corresponding to the PDU set to which the PDCP PDU belongs causes the PDCP PDU to be discarded.

**In** a case that the third information includes a fourth quantity of PDCP PDUs to be sent by the target object in the uplink transmission direction and a reason why the target object fails to successfully transmit a PDCP PDU in the uplink transmission direction, the network device may obtain, based on the third information, a fourth quantity of PDCP PDUs to be sent by the target object in the uplink transmission direction, and a fifth quantity of PDCP PDUs that have been transmitted but failed to be transmitted (the reason is unsuccessful transmission); and then, the ratio of the fifth quantity to the fourth quantity is determined as the PER of the target object in the uplink transmission direction.

**It** can be seen that when calculating the PER, the embodiment of the present disclosure does not take, as a part of the fifth quantity, data packets that fail to be transmitted for the reason that the PDCP PDUs are discarded due to the expiration of the PDCP discard timer corresponding to another PDU in the PDU set to which the PDCP PDU belongs, and for the reason that the PDCP PDU is discarded due to the expiration of the PDCP Set discard timer corresponding to the PDU set to which the PDCP PDU belongs.

In addition, the assistance information sent by the terminal may be data collected by the terminal for the target object within a preset time period. The network device may send first configuration information to the terminal, where the first configuration information is used to configure the preset time period. Certainly, the preset time period may alternatively be determined by the terminal based on pre-configured information or a protocol agreement.

Optionally, in this embodiment of the present disclosure, the assistance information may be carried by a UAI message and a PDCP control PDU. The network device receives the first sub-information in the assistance information periodically sent by the terminal, where the period is the preset time period; and receives, from the terminal based on the second event in the event trigger, sequence numbers of the PDU Sets that are not successfully transmitted by the target object in the uplink transmission direction by using a PDCP control PDU, or a sequence number of a PDCP PDU that is not successfully transmitted by the target object in the uplink transmission direction and identification information of whether the PDCP PDU belongs to one PDU Set.

The network device may obtain, based on the first sub-information received last time, a first quantity of PDU Sets received by the terminal from a higher layer in a latest preset time period and belonging to the target object, or a second quantity of PDU Sets to be sent by the target object in the uplink transmission direction; and according to the PDCP control PDU received in the latest preset time period, count a third quantity of PDU Sets that are not successfully transmitted by the target object in the uplink transmission direction; then, a ratio of the third quantity to the first quantity is determined as a PSER of the target object in the uplink transmission direction, or determine a ratio of the third quantity to the second quantity as a PSER of the target object in the uplink transmission direction. Herein, the latest preset time period refers to a time period from a first time to a second time, the second time is a receiving time of the first sub-information received last time, and the first time is before the second time and is spaced apart from the second time by the preset time period.

In order to better understand the above embodiments, the present disclosure will be further described below through several examples.

### Example 1: the assistance information is carried by a UAI message

This example 1 includes the following steps.

Step S101: the terminal determines whether a trigger condition for sending assistance information is met.

The trigger condition for sending the assistance information includes but is not limited to one of the following: 1) periodic trigger; 2) event trigger.

The period of the periodic trigger may be configured or preconfigured by a network, for example, a configured period is T. An event in the event trigger includes but is not limited to one of the following content:
(1) the number of PDU Sets that have not been successfully transmitted reaches a first threshold, and the first threshold may be pre-configured or may be configured by a network;
(2) any PDU Set of the terminal is not successfully transmitted, for example, the terminal discards one PDU Set.

Once the trigger condition for sending the assistance information is met, the terminal sends the assistance information to the network device, where the assistance information may be carried in but not limited to the UAI message.

Step S102: the terminal sends the assistance information to the network device.

In this step S102, the terminal sends the assistance information to the network device. Specifically, in this example, the terminal sends the UAI message, and the UAI message carries assistance information, and the terminal sends the assistance information to the network device. The assistance information includes the first information and/or the second information described above.

**In** this example, if the assistance information includes second information, that is, information used to determine the PSER of the target object in the uplink transmission direction, the second information includes but is not limited to one or more of the following:
1) a quantity of PDU Sets that are not successfully transmitted by the terminal in the uplink transmission direction;
2) a quantity of PDU Sets received by the terminal from a higher layer or a quantity of PDU Sets to be sent by the terminal;
3) sequence numbers of a PDCP PDU corresponding to a plurality of PDU Sets that are not successfully transmitted by the terminal (which may be a start sequence number or an end sequence number or all PDCP PDU sequence numbers) and identification information of whether the PDCP PDU belongs to one PDU Set.

A quantity of PDU Sets that are not successfully transmitted by the terminal in the uplink transmission direction, a quantity of PDUs received by the terminal from a higher layer or a quantity of PDU Sets to be sent by the terminal, and sequence numbers of a PDCP PDU corresponding to a plurality of PDU Sets that are not successfully transmitted by the terminal may be statistical data in a period of time (for example, within a T period).

A length of the T time period is configured or preconfigured by the network device.

The unsuccessfully transmitted PDU Sets include but are not limited to one or more of the following:
1) a PDU Set discarded due to expiration of a PDCP discard timer;
2) a PDU Set discarded due to transmission failure caused by channel quality.

Step S103: the network device performs related operations based on the assistance information.

The network device receives the assistance information, and may perform at least one of the following operations:
1) adjusting a reordering window of an RLC entity corresponding to the PDU Set, for example, updating a lower boundary of a reordering window;
2) calculating the PSER according to the second information in the assistance information.

For example, assuming that the assistance information includes that the number of PDU Sets to be sent by the terminal in the T time period is M, the number of PDU Sets that are not successfully transmitted in the T time period is N, the statistical granularity of the PSER may be based on each bearer or based on each logical channel or based on each data flow (QoS flow).

### Example 2: Assistance Information is carried by a PDCP Control (PDCP) PDU

This example 2 includes the following steps:

Step S201: the terminal determines whether a trigger condition for sending assistance information is met.

The trigger condition for sending the assistance information includes but is not limited to one of the following: 1) periodic trigger; 2) event trigger.

The period of the periodic trigger may be configured or preconfigured by a network, for example, a configuration period is T. An event in the event trigger includes but is not limited to one of the following content:
(1) a quantity of PDU Sets that have not been successfully transmitted reaches a first threshold, and the first threshold may be pre-configured or a network configures the first threshold;
(2) any PDU Set in the QoS flow corresponding to the terminal is not successfully transmitted, for example, the terminal discards one PDU Set.

Once the trigger condition for sending the assistance information is met, the terminal sends the assistance information to the network device, where the assistance information may be, but is not limited to, a PDCP Control PDU. In this example, the assistance information is carried in a PDCP Control PDU. The assistance information may include the first information and/or the second information described above.

Optionally, the PDCP control PDU may carry a sequence number (SN) of a PDCP PDU that is not successfully sent by a transmit end. The unsuccessfully transmitted PDCP PDU includes a PDCP PDU discarded due to expiration of a PDCP discard timer and/or a PDCP PDU discarded due to transmission failure caused by channel quality.

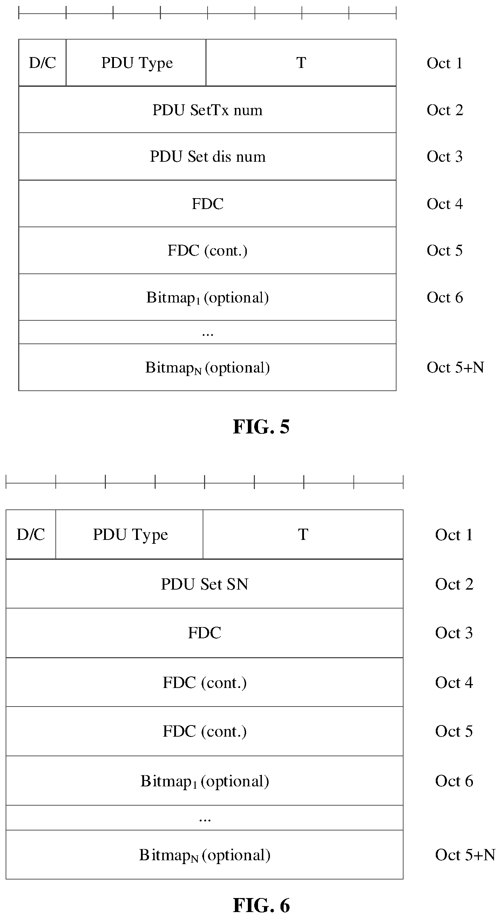

A format of the PDCP Control PDU is shown in FIG. 5. The meanings of various fields in the PDCP Control PDU shown in FIG. 5 are as follows:
- D/C: used to indicate that the PDCP PDU is a PDCP control PDU;
- PDU type: used to indicate the type of the PDCP Control PDU, for example, 100 may indicate the PDCP control PDU is used to transmit the assistance information herein;
- PDU Set tx num: used to indicate the number of PDU Sets to be transmitted by the transmit end in the T time period;
- PDU Set dis num: used to indicate the number of PDU Set that the transmit end has not successfully sent in the T time period;
- T: is used to indicate the length of the statistical time period T;
- FDC: used to indicate a COUNT value or an SN value of the first discarded PDCP PDU in the T time period.
- Bitmap: the length is variable and is used to indicate whether each PDCP PDU is discarded starting from the FDC.

step S202: the terminal sends the assistance information to the network device.

In this step S202, the terminal sends the assistance information to the network device. If the assistance information is used to indicate the PDU Set that the terminal fails to transmit in the uplink transmission direction, the content of the assistance information includes but is not limited to one or more of the following:
1) sequence numbers of PDCP PDUs corresponding to a single PDU set that is not successfully transmitted (which may be a start sequence number or an end sequence number or all PDCP PDU sequence numbers)
2) a quantity of PDU Sets received by the terminal from a higher layer or a quantity of PDU Sets to be sent by the terminal;
3) sequence numbers of PDCP PDUs corresponding to a plurality of PDU Sets that are not successfully transmitted by the terminal.

A quantity of PDU Sets received by the terminal from a higher layer, a quantity of PDU Sets to be sent by the terminal, and sequence numbers of PDCP PDUs corresponding to a plurality of PDU Sets that are not successfully transmitted by the terminal may be statistical data in a period of time (for example, within a T time period).

A length of the T time period is configured or preconfigured by the network device.

The unsuccessfully transmitted PDU Sets include but are not limited to one or more of the following:
1) a PDU Set discarded due to expiration of the PDCP discard timer;
2) a PDU Set discarded due to transmission failure caused by channel quality.

Step S203: the network device performs related operations based on the assistance information.

The network device receives the assistance information, and may perform at least one of the following operations:
1) adjusting a reordering window of an RLC entity corresponding to the PDU Set, for example, updating a lower boundary of a reordering window;
2) calculating a PSER according to the assistance information;
3) calculating a packet error rate (PER) according to the assistance information.

When the PER is specifically calculated, the numerator needs to subtract the quantity of PDUs discarded due to discarding other PDUs in the PDU Set.

The PSER is calculated according to the assistance information, for example, as follows:
assuming that the assistance information includes that the quantity of PDU Sets to be sent by the terminal in the T time period is M, and the number of unsuccessfully transmitted PDU Sets in the T time period is N, PSER = N/M. The statistical granularity of the PSER may be based on each bearer or based on each logical channel or based on each QoS flow.

The PER is calculated according to the assistance information, for example, as follows: assuming that the assistance information includes that the quantity of PDCP PDUs to be sent by the terminal in a period of time T is M, and the total quantity of PDCP PDUs discarded in the time period is N. In the N PDCP PDUs, the quantity of PDCP PDUs associated with discarding the entirety of a PDU Set based on the PDU Set Integrated Handling (PSIHI) is P, and therefore, P PDCP PDUs of the above N PDCU PDUs are removed, thus, PER = (N-P)/M.

### Example 3: the assistance information is carried by the UAI message and the PDCP Control PDU

In this example, the assistance information is carried by the UAI message and the PDCP Control PDU. For example, the UAI message transmits the first sub-information in the second information described above, for example, the total quantity of PDU Sets that the terminal receives from a higher layer or needs to be sent by the terminal within a period of time, and the PDCP Control PDU transmits the second sub-information in the second information described above, for example, is used to indicate related information discarded per PDU Set.

This example 3 includes the following steps.

Step S301: the terminal determines whether a trigger condition for sending the UAI message is satisfied.

The trigger condition for sending the UAI message includes a periodic trigger.

The period of the periodic trigger may be configured or preconfigured by a network, for example, a configuration period is T.

Once the trigger condition for periodically sending the UAI message is met, the terminal sends the first sub-information in the assistance information to the network device. For example, the UAI message may be used to indicate a total quantity of PDU Sets that the terminal receives from a higher layer or needs to be sent by the terminal within a period of time.

Step S302: the terminal determines whether a trigger condition for sending the PDCP Control PDU is satisfied.

The trigger condition of the PDCP control PDU includes an event trigger, where the event is that the terminal has at least one PDU Set unsuccessfully transmitted or the terminal specifies that at least one PDU Set corresponding to the DRB is not successfully transmitted, for example, the terminal discards one PDU Set.

Once the trigger condition of the PDCP Control PDU is met, the terminal sends the second sub-information in the assistance information to the network device. The second sub-information may be carried by using, but not limited to, a PDCP Control PDU.

Optionally, the PDCP control PDU may further carry an SN of a PDU that is not successfully sent by the transmit end, or indicate that there is a PDU set that has not been successfully sent. The unsuccessfully transmitted PDU includes a PDU discarded due to expiration of a PDCP discard timer and/or a PDU discarded due to transmission failure caused by channel quality.

An example in which the PDCP Control PDU may further carry an SN of a PDU that is not successfully sent by the transmission end is used as an example, for example, a format of the PDCP Control PDU is shown in FIG. 6. The meanings of various fields in the PDCP Control PDU shown in FIG. 6 are as follows:
- D/C: used to indicate that the PDCP PDU is a PDCP control PDU;
- PDU type: used to indicate the type of the PDCP Control PDU, for example, 100 may be used to indicate that the control PDU is used to transmit the assistance information;
- PDU set SN: used to indicate an SN of a PDCP set that has not been successfully sent;
- PDU Set dis num: used to indicate the quantity of PDU Sets that the transmission end has not successfully sent in the T time period;
- T: used to indicate a statistical period or a statistical time corresponding to the PDU set SN;
- FDC: used to indicate the COUNT value or the SN value of the first discarded PDU in the PDU Set identified by the PDU Set SN;
- Bitmap: the length is variable and is used to indicate whether each PDU is to be discarded starting from the FDC.

step S303: the network device performs related operations based on the assistance information.

Specifically, the network device receives the assistance information, and may perform at least one of the following operations:
- adjusting a reordering window of an RLC entity corresponding to the PDU Set, for example, updating a lower boundary of a reordering window;
- computing a PSER according to the assistance information;
- calculating PER according to the assistance information.

For example, the network device may obtain, based on the UAI message, a first quantity of PDU Sets received by the terminal from a higher layer and belonging to the target object within a latest preset time period, or a second quantity of PDU Sets to be sent by the target object in the uplink transmission direction; and may count, based on the PDCP control PDUs received in the latest preset time period, a third quantity of PDU Sets that are not successfully transmitted by the target object in the uplink transmission direction. Then, the ratio of the third quantity to the first quantity may be determined as the PSER of the target object in the uplink transmission direction, or the ratio of the third quantity to the second quantity may be determined as the PSER of the target object in the uplink transmission direction.

For another example, when the PER is calculated, the numerator needs to subtract the quantity of PDUs discarded due to discarding another PDU in the PDU set.

For example, the network device receives the quantity M of PDUs to be sent by the terminal in the T time period determined by the UAI, and then determines, based on the PDCP control PDUs received in the T time period, the quantity N of PDUs that are not successfully sent by the terminal in the T time period. Then, the network device calculates the PSER based on the foregoing information, and a formula of the PSER is as follows: PSER = N/M. The statistical granularity of the PSER may be based on each bearer or based on each logical channel or based on each QoS flow.

### Example 4: reporting the PSER directly through the UAI message or the PDCP Control PDU

This example 4 includes the following steps:

step S401: the terminal determines the PSER.

The terminal calculates the PSER based on the quantity M of PDU sets to be sent by the terminal in the T time period and the quantity N of PDU sets that are not successfully sent by the terminal in the T time period, where the calculation formula is as follows: PSER = N/M. The statistical granularity of the PSER may be based on each bearer or based on each logical channel or based on each data flow QoS flow.

Step S402: the terminal reports the PSER to the network device through the UAI or the PDCP Control PDU.

The network device receives the PSER reported by the terminal, to directly obtain the PSER.

It can be learned from the foregoing examples that in the embodiments of the present disclosure, the terminal sends the assistance information to the network device, where the assistance information is used to indicate the PDU Set that the terminal fails to transmit in the uplink transmission direction and/or the PSER determined by the terminal, so that the network device may be assisted to adjust the reordering window and/or determine the PSER/PER.

The technical solutions provided in the embodiments of the present disclosure may be applied to a variety of systems, especially 5G systems. For example, the applicable system may be a global system of mobile communications (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunications system (UMTS), a worldwide interoperability for microwave access (WiMAX) system, a 5G new radio (NR) system, and the like. The plurality of systems each include a terminal device and a network device. The system may further include a core network part, for example, an evolved packet system (EPS), a 5G system (5G System, 5 GS), or the like.

The terminal device in the embodiments of the present disclosure may be a device that provides voice and/or data connectivity to a user, a handheld device having a wireless connection function, or another processing device connected to a wireless modem. In different systems, names of terminal devices may also be different, for example, in a 5G system, the terminal device may be referred to as user equipment (User Equipment, UE). The wireless terminal device may communicate with one or more core networks (CN) through a radio access network (RAN), and the wireless terminal device may be a mobile terminal device, such as a mobile phone (or referred to as a "cellular" phone) and a computer having a mobile terminal device, for example, may be a portable, pocket-sized, handheld, computer built-in or vehicle-mounted mobile device, and they exchange language and/or data with a radio access network. For example, a device such as a personal communication service (PCS) phone, a cordless phone, a session initiation protocol (SIP) phone, a wireless local loop (WLL) station, or a personal digital assistant (PDA). The wireless terminal device may also be referred to as a system, a subscriber unit, a subscriber station, a mobile station, a mobile, a remote station, an access point, a remote terminal, an access terminal, a user terminal, a user agent, and a user device, which is not limited in the embodiments of the present disclosure.

The network side device in the embodiments of the present disclosure may be a base station, and the base station may include a plurality of cells serving the terminal. According to different specific application occasions, the base station may also be referred to as an access point, or may be a device in an access network that communicates with a wireless terminal device through one or more sectors on an air interface, or another name. The network device may be configured to exchange the received over-the-air frame with an Internet Protocol (IP) packet as a router between the wireless terminal device and the rest of the access network, where the rest of the access network may include an Internet Protocol (IP) communication network. The network device may also coordinate attribute management of the air interface. For example, the network device in the embodiments of the present disclosure may be a base transceiver station (BTS) in a global system for mobile communications (GSM) or a code division multiple access (CDMA), or may be a network device (NodeB) in a wide-band code division multiple access (WCDMA), or may be an evolved network device (evolutional Node B, eNB, or e-NodeB) in a long term evolution (LTE) system, a 5G base station (gNB) in a next generation system, or a home evolved NodeB (HeNB), a relay node, a home base station (femto), a pico base station (pico), etc. which is not limited in the embodiments of the present disclosure. In some network structures, the network device may include a central unit (CU) node and a distributed unit (DU) node, and the centralized unit and the distributed unit may also be geographically separated.

The network-side device and the terminal device may each use one or more antennas to perform multi-input multi-output (MIMO) transmission, and the MIMO transmission may be single-user MIMO (SU-MIMO) or multi-user MIMO (MU-MIMO). The MIMO transmission may be two-dimensional MIMO (2D-MIMO), three-dimensional MIMO (3D-MIMO), full-dimension MIMO (FD-MIMO), or massive-MIMO (massive-MIMO), or may be diversity transmission or precoding transmission or beamforming transmission.

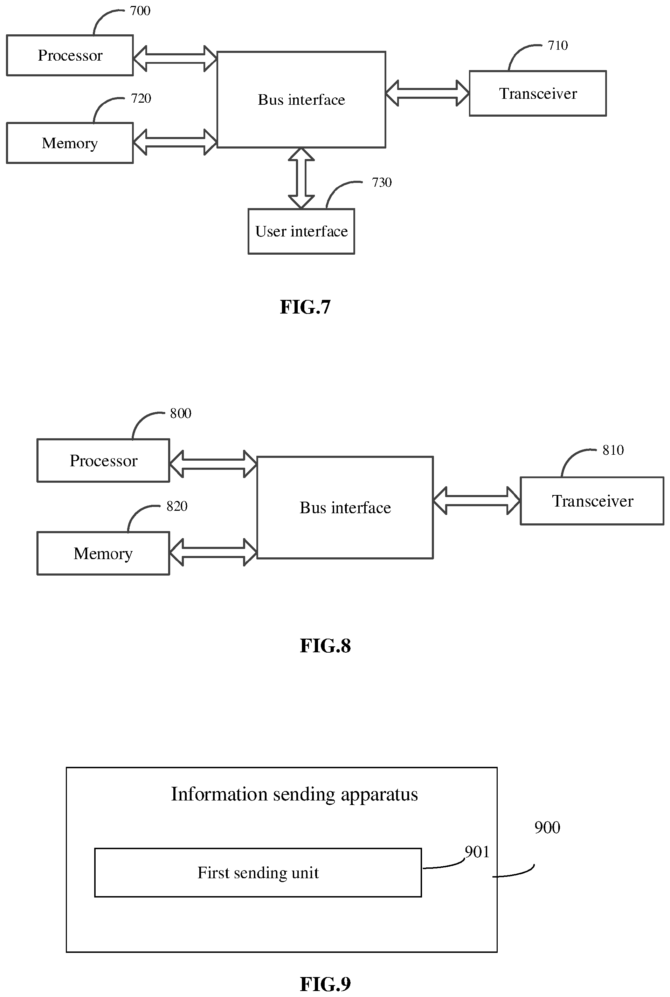

As shown in FIG. 7, an embodiment of the present disclosure further provides a terminal, including a processor 700, a transceiver 710, a memory 720, and a program stored on the memory 720 and executable on the processor 700, wherein the transceiver 710 is connected to the processor 700 and the memory 720 through a bus interface, wherein the processor 700 is configured to read a program in the memory and perform the following processes:
sending assistance information to a network device by using a transceiver 710, where the assistance information includes first information and/or second information, the first information is an error rate PSER of a packet data unit set PDU Set of a target object in the uplink transmission direction, and the second information is information used to determine a PSER of a target object in the uplink transmission direction, where the target object is the terminal, or a QoS flow of the terminal, or a radio bearer (RB) of the terminal, or a logical channel (LCH) of the terminal.

The transceiver 710 is for receiving and transmitting data under the control of the processor 700.

In FIG. 7, the bus architecture may include any number of interconnected buses and bridges, and in particular, various circuits of the memory represented by the processor 700 and the memories represented by the memory 720 are linked together. The bus architecture may also link various other circuits, such as a peripheral device, a voltage regulator, and a power management circuit, which are well known in the art, and therefore will not be further described herein. The bus interface provides an interface. The transceiver 710 may be a plurality of elements, i.e., including a transmitter and a receiver, providing means for communicating with various other devices on a transmission medium, the transmission media including wireless channels, wired channels, optical cables, etc. For different user devices, the user interface 730 may also be an interface capable of externally connecting to a required device, and the connected device includes, but is not limited to, a keypad, a display, a speaker, a microphone, a joystick, and the like.

The processor 700 is responsible for managing the bus architecture and the usual processing, and the memory 720 may store data used by the processor 700 in performing the operations.

Optionally, the processor 700 may be a central processing unit (CPU), an application-specific integrated circuit (ASIC), a field-programmable gate array (FPGA) or a complex programmable logic device (CPLD), and the processor may also adopt a multi-core architecture.

The processor, by invoking the computer program stored in the memory, is configured to perform any one of the methods provided in the embodiments of the present disclosure according to the obtained executable instructions. The processor and the memory may also be physically separated.

Optionally, the second information includes first sub-information and/or second sub-information, where the first sub-information includes at least one of the following information: a first quantity of PDU Sets received from a higher layer and belonging to the target object, and a second quantity of PDU Sets to be sent by the target object in the uplink transmission direction;
the second sub-information includes at least one of the following information: a third quantity of PDU Sets that are not successfully transmitted by the target object in the uplink transmission direction, sequence numbers of the PDU Sets that are not successfully transmitted by the target object in the uplink transmission direction, a sequence number of a PDCP PDU that is not successfully transmitted by the target object in the uplink transmission direction, and identification information of whether the PDCP PDU belongs to one PDU Set.

Optionally, the PDU sets that are not successfully transmitted by the target object in the uplink transmission direction include at least one of the following: a PDU Set discarded due to expiration of a PDCP discard timer or expiration of a PDCP Set discard timer; a PDU Set discarded due to transmission failure caused by a channel quality.

Optionally, the processor 700 further reads the computer program in the memory and performs the following operations: before sending the assistance information to the network device, detecting whether the trigger condition of reporting the assistance information is satisfied; in a case that a trigger condition of reporting assistance information is met, sending assistance information to the network device; wherein the trigger condition of reporting the assistance information includes at least one of the following: a periodic trigger and an event trigger.

Optionally, an event in the event trigger includes at least one of a first event and a second event; the first event is that a quantity of PDU Sets that are not successfully transmitted by the target object in the uplink transmission direction reaches a first threshold; and the second event is that any PDU Set of the target object in the uplink transmission direction is not successfully transmitted.

Optionally, the processor 700 further reads the computer program in the memory and performs the following operations: sending the assistance information to the network device through the UE assistance information (UAI) message and/or the packet data convergence protocol (PDCP) control PDU.

Optionally, the assistance information further includes third information, where the third information includes at least one of the following:
a packet error rate (PER) of the target object in the uplink transmission direction;
a fourth quantity of PDCP PDUs to be sent by the target object in the uplink transmission direction;
the reason why the target object fails to successfully transmit the PDCP PDU in the uplink transmission direction, the reason includes at least one of the following: the PDCP PDU has been transmitted but transmission fails; the PDCP PDU is discarded due to expiration of a PDCP discard timer corresponding to another PDU in a PDU set to which the PDCP PDU belongs; the PDCP PDU is discarded due to expiration of a PDCP Set discard timer corresponding to the PDU set to which the PDCP PDU belongs.

Optionally, the assistance information is data collected for the target object in a preset time period.

Optionally, the processor 700 further reads the computer program in the memory and performs the following operations: receiving, by a transceiver, first configuration information sent by a network device, and determining the preset time period according to the first configuration information; and/or, determining the preset time period according to pre-configured information or a protocol specification.

It should be noted that, the terminal provided in the embodiments of the present disclosure can implement all the method steps implemented by the method embodiment applied to the terminal, and can achieve the same technical effect, which will not be described in detail in this embodiment.

At least one embodiment of the present disclosure further provides a terminal, including a memory, a processor, and a computer program stored on the memory and capable of running on the processor. When the processor executes the program, each process in the method embodiment applied to the terminal is implemented, and the same technical effect can be achieved, to avoid repetition, and details are not described herein again.

As shown in FIG. 8, an embodiment of the present disclosure further provides a network device, including a processor 800, a transceiver 810, a memory 820, and a program stored on the memory 820 and executable on the processor 800, wherein the transceiver 810 is connected to the processor 800 and the memory 820 through a bus interface, wherein the processor 800 is configured to read a program in the memory and perform the following processes:
receiving, by a transceiver 810, assistance information sent by a terminal, the assistance information comprising first information and/or second information, wherein the first information is an error rate PSER of a PDU Set of a target object in the uplink transmission direction, and the second information is information for determining a PSER of a target object in the uplink transmission direction, wherein the target object is the terminal, or a QoS flow of the terminal, or a radio bearer (RB) of the terminal, or a logical channel (LCH) of the terminal.

The transceiver 810 is used to receive and transmit data under the control of the processor 800.

In FIG. 8, the bus architecture may include any number of interconnected buses and bridges, and in particular, the one or more processors represented by the processor 800 and various circuits of the memory represented by the memory 820 are linked together. The bus architecture may also link various other circuits, such as a peripheral device, a voltage regulator, and a power management circuit, which are well known in the art, and therefore will not be further described herein. The bus interface provides an interface. The transceiver 810 may be a plurality of elements, i.e., including a transmitter and a receiver, providing means for communicating with various other devices on a transmission medium, the transmission media including wireless channels, wired channels, optical cables, etc.

The processor 800 is responsible for managing the bus architecture and the usual processing, and the memory 820 may store the data used by the processor 800 in performing the operation.

The processor 800 may be a central processing unit (CPU), an application-specific integrated circuit (ASIC), a field-programmable gate array (FPGA) or a complex programmable logic device (CPLD), and the processor may also adopt a multi-core architecture.

Optionally, the second information includes first sub-information and/or second sub-information; where the first sub-information includes at least one of the following information: a first quantity of PDU Sets received by the terminal from a higher layer and belonging to the target object, and a second quantity of PDU Sets to be sent by the target object in the uplink transmission direction; and the second sub-information includes at least one of the following information: a third quantity of PDU Sets that are not successfully transmitted by the target object in the uplink transmission direction, a sequence number of a PDCP PDU that is not successfully transmitted by the target object in the uplink transmission direction, and identification information of whether the PDCP PDU belongs to one PDU Set.

Optionally, the PDU sets that are not successfully transmitted by the target object in the uplink transmission direction include at least one of the following:
a PDU Set discarded due to expiration of a PDCP discard timer or expiration of a PDCP PDU Set discard timer; a PDU Set discarded due to transmission failure caused by channel quality.

Optionally, in a case that the assistance information includes the second information, the processor 800 is configured to read the computer program in the memory and perform the following operations: determining the PSER of the target object in the uplink transmission direction according to the second information.

Optionally, the processor 800 is configured to read the computer program in the memory and perform the following operations: obtaining, based on the first sub-information, a first quantity of PDU Sets received by the terminal from a higher layer and belonging to the target object or a second quantity of PDU Sets to be sent by the target object in the uplink transmission direction; and obtaining, based on the second sub-information, a third quantity of PDU Sets that are not successfully transmitted by the target object in the uplink transmission direction; and determining a ratio of the third quantity to the first quantity as a PSER of the target object in the uplink transmission direction, or determining a ratio of the third quantity to the second quantity as a PSER of the target object in the uplink transmission direction.

Optionally, the processor 800 is configured to read the computer program in the memory and perform the following operations: receiving a UAI message and/or a PDCP control PDU sent by the terminal, where the UAI message and/or the PDCP control PDU carries the assistance information.

Optionally, the assistance information further includes third information, where the third information includes at least one of the following:
a packet error rate (PER) of the target object in the uplink transmission direction;
a fourth quantity of PDCP PDUs to be sent by the target object in the uplink transmission direction;
the reason why the target object fails to successfully transmit the PDCP PDU in the uplink transmission direction, the reason includes at least one of the following:
   the PDCP PDU has been transmitted but transmission fails;
   the PDCP PDU is discarded due to expiration of a PDCP discard timer corresponding to another PDU in a PDU set to which the PDCP PDU belongs;
   the PDCP PDU is discarded due to expiration of a PDCP Set discard timer corresponding to the PDU set to which the PDCP PDU belongs.

Optionally, the processor 800 is configured to read the computer program in the memory and perform the following operations: obtaining, based on the third information, a fourth quantity of PDCP PDUs to be sent by the target object in the uplink transmission direction, and a fifth quantity of PDCP PDUs that have been transmitted but transmission fails (the reason is unsuccessful transmission); and determining the ratio of the fifth quantity to the fourth quantity as the PER of the target object in the uplink transmission direction.

Optionally, the processor 800 is configured to read the computer program in the memory and perform the following operations: adjusting a reordering window of the radio link control (RLC) entity corresponding to the target object according to the assistance information.

Optionally, the assistance information is data collected by the terminal for the target object within a preset time period.

Optionally, the processor 800 is configured to read the computer program in the memory and perform the following operations: sending first configuration information to the terminal, where the first configuration information is used to configure the preset time period.

It should be noted that, the network device provided in the embodiments of the present disclosure can implement all the method steps implemented by the method embodiment applied to the network device, and can achieve the same technical effect, which will not be described in detail in this embodiment.

At least one embodiment of the present disclosure further provides a network device, including a memory, a processor, and a computer program stored on the memory and executable on the processor. When the processor executes the program, various processes applied to the method embodiments of the network device are implemented, and the same technical effect can be achieved, to avoid repetition, and details are not described herein again.

As shown in FIG. 9, an embodiment of the present disclosure provides an information sending apparatus 900, applied to a terminal and including: a first sending unit 901, configured to send assistance information to a network device, where the assistance information includes first information and/or second information, the first information is an error rate PSER of a packet data unit set PDU Set of a target object in the uplink transmission direction, and the second information is information used to determine a PSER of a target object in the uplink transmission direction; and the target object is the terminal, or a QoS flow of the terminal, or a radio bearer (RB) of the terminal, or a logical channel (LCH) of the terminal.

Optionally, the second information includes first sub-information and/or second sub-information; where the first sub-information includes at least one of the following information: a first quantity of PDU Sets received from a higher layer and belonging to the target object, and a second quantity of PDU Sets to be sent by the target object in the uplink transmission direction; the second sub-information includes at least one of the following information: a third quantity of PDU Sets that are not successfully transmitted by the target object in the uplink transmission direction, sequence numbers of the PDU Sets that are not successfully transmitted by the target object in the uplink transmission direction, a sequence number of a PDCP PDU that is not successfully transmitted by the target object in the uplink transmission direction, and identification information of whether the PDCP PDU belongs to one PDU Set.

Optionally, the PDU sets that are not successfully transmitted by the target object in the uplink transmission direction include at least one of the following:
a PDU Set discarded due to expiration of a PDCP discard timer or expiration of a PDCP Set discard timer;
a PDU Set discarded due to transmission failure caused by channel quality.

Optionally, the apparatus further includes: a detection unit, configured to detect, before sending the assistance information to the network device, whether the trigger condition of reporting the assistance information is satisfied; wherein the first sending unit 901 is further configured to send assistance information to the network device in a case that a trigger condition of reporting the assistance information is met; the trigger condition of reporting the assistance information includes at least one of the following: a periodic trigger and an event trigger.

Optionally, an event in the event trigger includes at least one of a first event and a second event; the first event is that a quantity of PDU Sets that are not successfully transmitted by the target object in the uplink transmission direction reaches a first threshold; and the second event is that any PDU Set of the target object in the uplink transmission direction is not successfully transmitted.

Optionally, the first sending unit 901 is further configured to: send the assistance information to the network device through the UE assistance information (UAI) message and/or the packet data convergence protocol (PDCP) control PDU.

Optionally, the assistance information further includes third information, where the third information includes at least one of the following:
a packet error rate (PER) of the target object in the uplink transmission direction;
a fourth quantity of PDCP PDUs to be sent by the target object in the uplink transmission direction;
the reason why the target object fails to successfully transmit the PDCP PDU in the uplink transmission direction, the reason includes at least one of the following: the PDCP PDU has been transmitted but transmission fails; the PDCP PDU is discarded due to expiration of a PDCP discard timer corresponding to another PDU in a PDU set to which the PDCP PDU belongs; the PDCP PDU is discarded due to a PDCP Set discard timer corresponding to the PDU set to which the PDCP PDU belongs.

Optionally, the assistance information is data collected for the target object in a preset time period.

Optionally, the apparatus further includes:
a first receiving unit, configured to receive first configuration information sent by a network device, and determine the preset time period based on the first configuration information; and/or,
a determining unit, configured to determine the preset time period based on pre-configuration information or a protocol specification.

It should be noted that the apparatus embodiment is a device corresponding to the foregoing information sending method embodiment, and all implementations in the foregoing method embodiments are applicable to embodiments of the apparatus, and can achieve the same technical effect.

It should be noted that, the above-mentioned apparatus provided in the embodiments of the present disclosure can implement all the method steps implemented in the method embodiment shown in FIG. 3, and can achieve the same technical effect, which will not be repeated here.

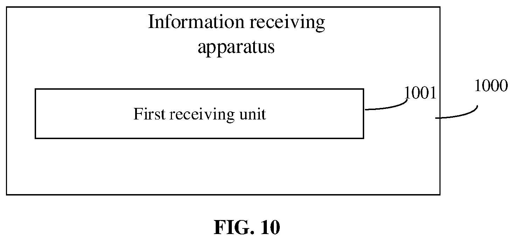

As shown in FIG. 10, an information receiving apparatus 1000 according to some embodiments of the present disclosure is applied to a network device and includes:
a first receiving unit 1001, configured to receive assistance information sent by a terminal, where the assistance information includes first information and/or second information, the first information is an error rate PSER of a PDU Set of a target object in the uplink transmission direction, and the second information is information used to determine a PSER of a target object in the uplink transmission direction, where the target object is the terminal, or a QoS flow of the terminal, or a radio bearer (RB) of the terminal, or a logical channel (LCH) of the terminal.

Optionally, the second information includes first sub-information and/or second sub-information; where the first sub-information includes at least one of the following information: a first quantity of PDU Sets received by the terminal from a higher layer and belonging to the target object, and a second quantity of PDU Sets to be sent by the target object in the uplink transmission direction; and the second sub-information includes at least one of the following information: a third quantity of PDU Sets that are not successfully transmitted by the target object in the uplink transmission direction, sequence numbers of the PDU Sets that are not successfully transmitted by the target object in the uplink transmission direction, a sequence number of a PDCP PDU that is not successfully transmitted by the target object in the uplink transmission direction, and identification information of whether the PDCP PDU belongs to one PDU Set.

Optionally, the PDU set that is not successfully transmitted by the target object in the uplink transmission direction includes at least one of the following:
a PDU Set discarded due to expiration of a PDCP discard timer or expiration of a PDCP PDU Set discard timer;
a PDU Set discarded due to transmission failure caused by channel quality.

Optionally, the apparatus further includes: a first obtaining unit, configured to determine, in a case that the assistance information includes the second information, a PSER of the target object in the uplink transmission direction according to the second information.

Optionally, the first obtaining unit is further configured to: obtain, based on the first sub-information, a first quantity of PDU Sets received by the terminal from a higher layer and belonging to the target object or a second quantity of PDU Sets to be sent by the target object in the uplink transmission direction; and obtain, based on the second sub-information, a third quantity of PDU Sets that are not successfully transmitted by the target object in the uplink transmission direction; and determine a ratio of the third quantity to the first quantity as a PSER of the target object in the uplink transmission direction, or determine a ratio of the third quantity to the second quantity as a PSER of the target object in the uplink transmission direction.

Optionally, the first receiving unit is further configured to: receive a UAI message and/or a PDCP control PDU sent by the terminal, where the UAI message and/or the PDCP control PDU carries the assistance information.

Optionally, the assistance information further includes third information, where the third information includes at least one of the following:
a packet error rate (PER) of the target object in the uplink transmission direction;
a fourth quantity of PDCP PDUs to be sent by the target object in the uplink transmission direction;
the reason why the target object fails to successfully transmit the PDCP PDU in the uplink transmission direction, wherein the reason includes at least one of the following: the PDCP PDU has been transmitted but transmission fails; the PDCP PDU is discarded due to expiration of a PDCP discard timer corresponding to another PDU in a PDU set to which the PDCP PDU belongs causes the PDCP PDU to be discarded; the PDCP PDU is discarded due to expiration of a PDCP Set discard timer corresponding to the PDU set to which the PDCP PDU belongs causes the PDCP PDU to be discarded.

Optionally, the apparatus further includes: a second obtaining unit, configured to obtain, based on the third information, a fourth quantity of PDCP PDUs to be sent by the target object in the uplink transmission direction, and a fifth quantity of PDCP PDUs that have been transmitted but transmission fails (the reason is unsuccessful transmission); and determine a ratio of the fifth quantity to the fourth quantity as the PER of the target object in the uplink transmission direction.

Optionally, the apparatus further includes: an adjusting unit, configured to adjust, based on the assistance information, a reordering window of a radio link control (RLC) entity corresponding to the target object.

Optionally, the assistance information is data collected by the terminal for the target object within a preset time period.

Optionally, the apparatus further includes: a first sending unit, configured to send first configuration information to the terminal, where the first configuration information is used to configure the preset time period.

It should be noted that, the above-mentioned apparatus provided in the embodiments of the present disclosure can implement all the method steps implemented in the method embodiment shown in FIG. 4, and can achieve the same technical effect, which will not be repeated here.

It should be noted that the division of the units in the embodiments of the present disclosure is schematic and is merely logical function division, and there may be another division manner during actual implementation. In addition, functional units in the embodiments of the present disclosure may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on this understanding, the technical solution of the present disclosure essentially or the part contributing to the related art or all or part of the technical solution may be embodied in the form of a software product. The computer software product is stored in a storage medium, and includes several instructions for enabling a computer device (which may be a personal computer, a server, a network device, or the like) or a processor to perform all or part of the steps of the method described in the embodiments of the present disclosure. The foregoing storage medium includes various media that can store program code, such as a USB flash drive, a removable hard disk, a read-only memory (ROM), a random access memory (RAM), a magnetic disk, or an optical disk.

It should be noted that, the above-mentioned apparatus provided in the embodiments of the present disclosure can implement all the method steps implemented in the foregoing method embodiments, and can achieve the same technical effect, and the same parts and beneficial effects of the method embodiments are not described in detail herein.

An embodiment of the present disclosure further provides a processor-readable storage medium, where the readable storage medium stores a program, and when the program is executed by a processor, various processes of the foregoing method embodiments are implemented, and the same technical effect can be achieved, to avoid repetition, and details are not described herein again. The readable storage medium may be any available medium or data storage device that can be accessed by a processor, including but not limited to a magnetic memory (for example, a floppy disk, a hard disk, a magnetic tape, a magneto-optical disk (MO), etc.), an optical memory (for example, a compact disk (CD), a digital versatile disk (DVD), a Blu-ray Disk (BD), a high-definition versatile disk (HVD), and the like), and a semiconductor memory (for example, a read-only memory (ROM), an erasable programmable read-only memory (EPROM), an electrically EPROM (EEPROM), a non-volatile memory (NAND FLASH), a solid state drive (SSD)), and the like.

It should be noted that, in this specification, the terms "include", "comprise", or any other variation thereof are intended to cover a non-exclusive inclusion, so that a process, method, article, or apparatus that includes a series of elements not only includes those elements, but also includes other elements that are not explicitly listed, or further includes elements inherent to such a process, method, article, or apparatus. Without more restrictions, the statement "includes one..." defined element does not exclude the existence of other identical elements in the process, method, article, or apparatus that includes the element.

Through the description of the above embodiments, those skilled in the art can clearly understand that the method in the above embodiments can be implemented by means of software plus a necessary universal hardware platform, and certainly can also be implemented by hardware, but in many cases, the former is a better implementation. According to such an understanding, the technical solution of the present disclosure essentially or the part contributing to the related art may be embodied in the form of a software product, and the computer software product is stored in a storage medium (for example, a ROM/RAM, a magnetic disk, an optical disk), and includes several instructions for enabling a terminal (which may be a mobile phone, a computer, a server, an air conditioner, or a network device, etc.) to perform the method described in the embodiments of the present disclosure.

The embodiments of the present disclosure are described above in conjunction with the accompanying drawings, but the present disclosure is not limited to the specific embodiments described above, and the specific embodiments described above are merely illustrative and not restrictive, and those of ordinary skill in the art may make many forms without departing from the spirit of the present disclosure and the protection scope of the claims, and all fall within the protection of the present disclosure.

## Claims

1. An information sending method applied to a terminal, the method comprising:
sending assistance information to a network device, wherein the assistance information comprises first information and/or second information, the first information is an error rate (PSER) of a packet data unit set (PDU Set) of a target object in the uplink transmission direction, and the second information is information used to determine the PSER of the target object in the uplink transmission direction, wherein the target object is the terminal, a quality of service (QoS) flow of the terminal, a radio bearer (RB) of the terminal, or a logical channel (LCH) of the terminal.

2. The method according to claim 1, wherein the second information comprises first sub-information and/or second sub-information; wherein
the first sub-information comprises at least one of the following information:
a first quantity of PDU Sets received from a higher layer and belonging to the target object, or a second quantity of PDU Sets to be sent by the target object in the uplink transmission direction;
the second sub-information comprises at least one of the following information:
a third quantity of PDU Sets that are not successfully transmitted by the target object in the uplink transmission direction, sequence numbers of the PDU Sets that are not successfully transmitted by the target object in the uplink transmission direction, sequence numbers of a Packet Data Convergence Protocol (PDCP) PDU that is not successfully transmitted by the target object in the uplink transmission direction, and identification information of whether the PDCP PDU belongs to a PDU Set.

3. The method according to claim 2, wherein the PDU Sets that are not successfully transmitted by the target object in the uplink transmission direction comprise at least one of the following:
a PDU Set discarded due to expiration of a PDCP discard timer or expiration of a PDCP Set discard timer; or
a PDU set that discarded due to transmission failure caused by a channel quality reason.

4. The method according to claim 1, wherein before sending the assistance information to the network device, the method further comprises:
detecting whether a trigger condition of reporting the assistance information is satisfied;
in a case that the trigger condition of reporting the assistance information is met, sending the assistance information to the network device;
the trigger condition of reporting the assistance information comprises at least one of the following: a periodic trigger and an event trigger.

5. The method according to claim 4, wherein an event in the event trigger comprises at least one of a first event and a second event;
the first event is that the quantity of PDU Sets that are not successfully transmitted by the target object in the uplink transmission direction reaches a first threshold;
the second event is that any PDU Set of the target object in the uplink transmission direction is not successfully transmitted.

6. The method according to claim 1, wherein sending the assistance information to the network device comprises:
sending the assistance information to the network device through UE assistance information (UAI) message and/or a PDCP control PDU.

7. The method according to claim 2, wherein the assistance information further comprises third information, and the third information comprises at least one of the following:
a packet error rate (PER) of the target object in the uplink transmission direction;
a fourth quantity of PDCP PDUs to be sent by the target object in the uplink transmission direction;
a reason why the target object fails to successfully transmit the PDCP PDU in the uplink transmission direction, wherein the reason comprises at least one of the following:
that the PDCP PDU has been transmitted but transmission fails;
that expiration of a PDCP discard timer corresponding to another PDU in the PDU set to which the PDCP PDU belongs causes the PDCP PDU to be discarded;
that expiration of a PDCP Set discard timer corresponding to the PDU set to which the PDCP PDU belongs causes the PDCP PDU to be discarded.

8. The method according to any one of claims 1 to 7, wherein the assistance information is data collected for the target object in a preset time period.

9. The method according to claim 8, further comprising:
receiving first configuration information sent by a network device, and determining the preset time period based on the first configuration information; or,
determining the preset time period according to pre-configuration information or a protocol specification.

10. An information receiving method applied to a network device, the method comprising:
receiving assistance information sent by a terminal, wherein the assistance information comprises first information and/or second information, the first information is an error rate (PSER) of a PDU Set of a target object in the uplink transmission direction, and the second information is information used to determine the PSER of the target object in the uplink transmission direction, wherein the target object is a terminal, a quality of service (QoS) flow of the terminal, a radio bearer (RB) of the terminal, or a logical channel (LCH) of the terminal.

11. The method according to claim 10, wherein the second information comprises first sub-information and/or second sub-information; wherein
the first sub-information comprises at least one of the following information:
a first quantity of PDU Sets received by the terminal from a higher layer and belonging to the target object, or a second quantity of PDU Sets to be sent by the target object in the uplink transmission direction;
the second sub-information comprises at least one of the following information:
a third quantity of PDU Sets that are not successfully transmitted by the target object in the uplink transmission direction, sequence numbers of the PDU Sets that are not successfully transmitted by the target object in the uplink transmission direction, a sequence number of a PDCP PDU that is not successfully transmitted by the target object in the uplink transmission direction, and identification information of whether the PDCP PDU belongs to a PDU Set.

12. The method according to claim 11, wherein the PDU Sets that are not successfully transmitted by the target object in the uplink transmission direction comprises at least one of the following:
a PDU Set discarded due to expiration of a PDCP discard timer or expiration of a PDCP PDU Set discard timer; or
a PDU Set discarded due to transmission failure caused by a channel quality reason.

13. The method according to claim 11, wherein in a case that the assistance information comprises the second information, the method further comprises:
determining the PSER of the target object in the uplink transmission direction according to the second information.

14. The method according to claim 13, wherein determining the PSER of the target object in the uplink transmission direction according to the second information comprises:
obtaining, based on the first sub-information, a first quantity of PDU Sets received by the terminal from a higher layer and belonging to the target object or a second quantity of PDU Sets to be sent by the target object in the uplink transmission direction;
obtaining, based on the second sub-information, a third quantity of PDU Sets that are not successfully transmitted by the target object in the uplink transmission direction; and
determining a ratio of the third quantity to the first quantity as the PSER of the target object in the uplink transmission direction, or determining a ratio of the third quantity to the second quantity as the PSER of the target object in the uplink transmission direction.

15. The method according to claim 10, wherein receiving the assistance information sent by the terminal comprises:
receiving a UAI message and/or a PDCP control PDU sent by the terminal, wherein the UAI message and/or the PDCP control PDU carries the assistance information.

16. The method according to claim 10, wherein the assistance information further comprises third information, and the third information comprises at least one of the following:
a packet error rate PER of the target object in the uplink transmission direction;
a fourth quantity of PDCP PDUs to be sent by the target object in the uplink transmission direction;
the reason why the target object fails to successfully transmit the PDCP PDU in the uplink transmission direction comprises at least one of the following:
that the PDCP PDU has been transmitted but transmission fails;
that expiration of a PDCP discard timer corresponding to another PDU in a PDU set to which the PDCP PDU belongs causes the PDCP PDU to be discarded;
that expiration of a PDCP Set discard timer corresponding to the PDU set to which the PDCP PDU belongs causes the PDCP PDU to be discarded.

17. The method according to claim 16, further comprising:
obtaining, based on the third information, a fourth quantity of PDCP PDUs to be sent by the target object in the uplink transmission direction, and a fifth quantity of PDCP PDUs that have been transmitted but the transmission fails;
determine the ratio of the fifth quantity to the fourth quantity as the PER of the target object in the uplink transmission direction.

18. The method according to claim 10, further comprising:
adjusting a reordering window of a Radio Link Control (RLC) entity corresponding to the target object according to the assistance information.

19. The method according to any one of claims 10 to 18, wherein the assistance information is data collected by the terminal for the target object within a preset time period.

20. The method according to claim 19, further comprising:
sending first configuration information to the terminal, wherein the first configuration information is used to configure the preset time period.

21. A terminal comprising a memory, a transceiver, and a processor,
wherein the memory is configured to store a computer program; the transceiver is configured to send and receive data under control of the processor; and the processor is configured to read the computer program in the memory and perform the following operations:
sending assistance information to a network device by using a transceiver, wherein the assistance information comprises first information and/or second information, the first information is an error rate (PSER) of a packet data unit set (PDU Set) of a target object in an uplink transmission direction, and the second information is information used to determine the PSER of the target object in the uplink transmission direction; and the target object is the terminal, a quality of service (QoS) flow of the terminal, a radio bearer (RB) of the terminal, or a logical channel (LCH) of the terminal.

22. The terminal according to claim 21, wherein the second information comprises first sub-information and/or second sub-information; wherein
the first sub-information comprises at least one of the following information:
a first quantity of PDU Sets received from a higher layer and belonging to the target object, or a second quantity of PDU Sets to be sent by the target object in the uplink transmission direction;
the second sub-information comprises at least one of the following information:
a third quantity of PDU Sets that are not successfully transmitted by the target object in the uplink transmission direction, sequence numbers of the PDU Sets that are not successfully transmitted by the target object in the uplink transmission direction, a sequence number of a PDCP PDU that is not successfully transmitted by the target object in the uplink transmission direction, and identification information of whether the PDCP PDU belongs to a PDU Set.

23. The terminal according to claim 22, wherein the PDU Sets that are not successfully transmitted by the target object in the uplink transmission direction comprises at least one of the following:
a PDU Set discarded due to expiration of a PDCP discard timer or expiration of a PDCP Set discard timer;
a PDU Set discarded due to transmission failure caused by a channel quality reason.

24. The terminal according to claim 21, wherein the processor further reads the computer program in the memory and performs the following operations:
before sending the assistance information to the network device, detecting whether a trigger condition of reporting the assistance information is satisfied; and
in a case that the trigger condition of reporting the assistance information is satisfied, sending the assistance information to the network device;
wherein the trigger condition of reporting the assistance information comprises at least one of the following: a periodic trigger and an event trigger.

25. The terminal according to claim 24, wherein an event in the event trigger comprises at least one of a first event and a second event;
the first event is that a quantity of PDU Sets that are not successfully transmitted by the target object in the uplink transmission direction reaches a first threshold;
the second event is that any PDU Set of the target object in the uplink transmission direction is not successfully transmitted.

26. The terminal according to claim 21, wherein the processor further reads the computer program in the memory and performs the following operations:
sending the assistance information to the network device through UE assistance information (UAI) message and/or a packet data convergence protocol PDCP control PDU.

27. The terminal according to claim 22, wherein the assistance information further comprises third information, and the third information comprises at least one of the following:
a packet error rate (PER) of the target object in the uplink transmission direction;
a fourth quantity of PDCP PDUs to be sent by the target object in the uplink transmission direction;
a reason why the target object fails to successfully transmit the PDCP PDU in the uplink transmission direction, wherein the reason comprises at least one of the following:
that the PDCP PDU has been transmitted but transmission fails;
that expiration of a PDCP discard timer corresponding to another PDU in a PDU set to which the PDCP PDU belongs causes the PDCP PDU to be discarded;
that expiration of a PDCP Set discard timer corresponding to the PDU set to which the PDCP PDU belongs causes the PDCP PDU to be discarded.

28. The terminal according to any one of claims 21 to 27, wherein the assistance information is data collected for the target object in a preset time period.

29. The terminal according to claim 28, wherein the processor further reads the computer program in the memory and performs the following operations:
receiving, by a transceiver, first configuration information sent by a network device, and determining the preset time period based on the first configuration information; or,
determining the preset time period according to pre-configuration information or a protocol specification.

30. A network device comprising a memory, a transceiver, and a processor,
wherein the memory is configured to store a computer program; the transceiver is configured to send and receive data under control of the processor; the processor is configured to read the computer program in the memory and perform the following operations:
receiving, by the transceiver, assistance information sent by a terminal, wherein the assistance information comprises first information and/or second information, the first information is an error rate (PSER) of a PDU Set of a target object in an uplink transmission direction, and the second information is information used to determine the PSER of the target object in the uplink transmission direction, wherein the target object is the terminal, a quality of service (QoS) flow of the terminal, a radio bearer (RB) of the terminal, or a logical channel (LCH) of the terminal.

31. The network device according to claim 30, wherein the second information comprises first sub-information and/or second sub-information; wherein
the first sub-information comprises at least one of the following information:
a first quantity of PDU Sets received by the terminal from a higher layer and belonging to the target object, or a second quantity of PDU Sets to be sent by the target object in the uplink transmission direction;
the second sub-information comprises at least one of the following information:
a third quantity of PDU Sets that are not successfully transmitted by the target object in the uplink transmission direction, sequence numbers of the PDU Sets that are not successfully transmitted by the target object in the uplink transmission direction, a sequence number of a PDCP PDU that is not successfully transmitted by the target object in the uplink transmission direction, and identification information of whether the PDCP PDU belongs to a PDU Set.

32. The network device according to claim 31, wherein the PDU Sets that are not successfully transmitted by the target object in the uplink transmission direction comprises at least one of the following:
a PDU Set discarded due to expiration of a PDCP discard timer or expiration of a PDCP PDU Set discard timer;
a PDU Set discarded due to transmission failure caused by a channel quality reason.

33. The network device according to claim 31, wherein in a case that the assistance information comprises the second information, the processor further reads the computer program in the memory and performs the following operations:
determining the PSER of the target object in the uplink transmission direction according to the second information.

34. The network device according to claim 33, wherein the processor further reads the computer program in the memory and performs the following operations:
obtaining, based on the first sub-information, a first quantity of PDU Sets received by the terminal from a higher layer and belonging to the target object or a second quantity of PDU Sets to be sent by the target object in the uplink transmission direction;
obtaining, based on the second sub-information, a third quantity of PDU Sets that are not successfully transmitted by the target object in the uplink transmission direction;
determining a ratio of the third quantity to the first quantity as the PSER of the target object in the uplink transmission direction, or determining a ratio of the third quantity to the second quantity as the PSER of the target object in the uplink transmission direction.

35. The network device according to claim 30, wherein the processor further reads the computer program in the memory and performs the following operations:
receiving a UAI message and/or a PDCP control PDU sent by the terminal, wherein the UAI message and/or the PDCP control PDU carries the assistance information.

36. The network device according to claim 30, wherein the assistance information further comprises third information, and the third information comprises at least one of the following:
a packet error rate (PER) of the target object in the uplink transmission direction;
a fourth quantity of PDCP PDUs to be sent by the target object in the uplink transmission direction;
a reason why the target object fails to successfully transmit the PDCP PDU in the uplink transmission direction, wherein the reason comprises at least one of the following:
that the PDCP PDU has been transmitted but transmission fails;
that expiration of a PDCP discard timer corresponding to another PDU in a PDU set to which the PDCP PDU belongs causes the PDCP PDU to be discarded;
that expiration of a PDCP Set discard timer corresponding to the PDU set to which the PDCP PDU belongs causes the PDCP PDU to be discarded.

37. The network device according to claim 36, wherein the processor further reads the computer program in the memory and performs the following operations:
obtaining, based on the third information, a fourth quantity of PDCP PDUs to be sent by the target object in the uplink transmission direction, or a fifth quantity of PDCP PDUs that have been transmitted but failed to be transmitted; and
determining a ratio of the fifth quantity to the fourth quantity as the PER of the target object in the uplink transmission direction.

38. The network device according to claim 30, wherein the processor further reads the computer program in the memory and performs the following operations:
adjusting a reordering window of a RLC entity corresponding to the target object according to the assistance information.

39. The network device according to any one of claims 30 to 38, wherein the assistance information is data collected by the terminal for the target object within a preset time period.

40. The network device according to claim 39, wherein the processor further reads the computer program in the memory and performs the following operations:
sending first configuration information to the terminal, wherein the first configuration information is used to configure the preset time period.

41. An information sending apparatus applied to a terminal, wherein the apparatus comprises:
a first sending unit, configured to send assistance information to a network device, wherein the assistance information comprises first information and/or second information, the first information is an error rate (PSER) of a packet data unit set (PDU Set) of a target object in an uplink transmission direction, and the second information is information used to determine the (PSER) of the target object in the uplink transmission direction; and the target object is the terminal, a quality of service (QoS) flow of the terminal, a radio bearer (RB) of the terminal, or a logical channel (LCH) of the terminal.

42. The apparatus according to claim 41, wherein the second information comprises first sub-information and/or second sub-information; wherein
the first sub-information comprises at least one of the following information:
a first quantity of PDU Sets received from a higher layer and belonging to the target object, or a second quantity of PDU Sets to be sent by the target object in the uplink transmission direction;
the second sub-information comprises at least one of the following information:
a third quantity of PDU Sets that are not successfully transmitted by the target object in the uplink transmission direction, sequence numbers of the PDU Sets that are not successfully transmitted by the target object in the uplink transmission direction, a sequence number of a PDCP PDU that is not successfully transmitted by the target object in the uplink transmission direction, or identification information of whether the PDCP PDU belongs to a PDU Set.

43. The apparatus according to claim 42, wherein the PDU sets that are not successfully transmitted by the target object in the uplink transmission direction comprises at least one of the following:
a PDU Set discarded due to expiration of a PDCP discard timer or expiration of a PDCP Set discard timer;
a PDU Set discarded due to transmission failure caused by a channel quality reason.

44. The apparatus according to claim 41, further comprising:
a detection unit, configured to detect, before sending the assistance information to the network device, whether a trigger condition of reporting the assistance information is satisfied;
wherein the first sending unit is further configured to send the assistance information to the network device in a case that the trigger condition of reporting the assistance information is satisfied;
the trigger condition of reporting the assistance information comprises at least one of the following: a periodic trigger and an event trigger.

45. The apparatus according to claim 44, wherein events in the event trigger comprise at least one of a first event and a second event;
the first event is that the quantity of PDU Sets that are not successfully transmitted by the target object in the uplink transmission direction reaches a first threshold; and
the second event is that any PDU Set of the target object in the uplink transmission direction is not successfully transmitted.

46. The apparatus according to claim 41, wherein the first sending unit is further configured to:
send the assistance information to the network device through a UE assistance information UAI message and/or a packet data convergence protocol PDCP control PDU.

47. The apparatus according to claim 42, wherein the assistance information further comprises third information, and the third information comprises at least one of the following:
a packet error rate (PER) of the target object in the uplink transmission direction;
a fourth quantity of PDCP PDUs to be sent by the target object in the uplink transmission direction;
a reason why the target object fails to successfully transmit the PDCP PDU in the uplink transmission direction, wherein the reason comprises at least one of the following:
that the PDCP PDU has been transmitted but transmission fails;
that expiration of a PDCP discard timer corresponding to another PDU in a PDU set to which the PDCP PDU belongs causes the PDCP PDU to be discarded;
that expiration of a PDCP Set discard timer corresponding to the PDU set to which the PDCP PDU belongs causes the PDCP PDU to be discarded.

48. The apparatus according to any one of claims 41 to 47, wherein the assistance information is data collected for the target object in a preset time period.

49. The apparatus according to claim 48, further comprising:
a first receiving unit, configured to receive first configuration information sent by a network device, and determine the preset time period based on the first configuration information; or,
a determining unit, configured to determine the preset time period based on pre-configuration information or a protocol specification.

50. An information receiving apparatus applied to a network device, wherein the apparatus comprises:
a first receiving unit, configured to receive assistance information sent by a terminal, wherein the assistance information comprises first information and/or second information, the first information is an error rate (PSER) of a PDU Set of a target object in an uplink transmission direction, the second information is information used to determine the PSER of the target object in the uplink transmission direction, wherein the target object is the terminal, a quality of service (QoS) flow of the terminal, a radio bearer (RB) of the terminal, or a logical channel (LCH) of the terminal.

51. The apparatus according to claim 50, wherein the second information comprises first sub-information and/or second sub-information; wherein
the first sub-information comprises at least one of the following information:
a first quantity of PDU Sets received by the terminal from a higher layer and belonging to the target object, or a second quantity of PDU Sets to be sent by the target object in the uplink transmission direction;
the second sub-information comprises at least one of the following information:
a third quantity of PDU Sets that are not successfully transmitted by the target object in the uplink transmission direction, sequence numbers of the PDU Sets that are not successfully transmitted by the target object in the uplink transmission direction, a sequence number of a PDCP PDU that is not successfully transmitted by the target object in the uplink transmission direction, or identification information of whether the PDCP PDU belongs to a PDU Set.

52. The apparatus according to claim 51, wherein the PDU sets that are not successfully transmitted by the target object in the uplink transmission direction comprises at least one of the following:
a PDU Set discarded due to expiration of a PDCP discard timer or expiration of a PDCP PDU Set discard timer; or
a PDU Set discarded due to transmission failure caused by a channel quality reason.

53. The apparatus according to claim 51, further comprising:
a first obtaining unit, configured to determine, in a case that the assistance information comprises the second information, the PSER of the target object in the uplink transmission direction according to the second information.

54. The apparatus according to claim 53, wherein the first obtaining unit is further configured to:
obtain, based on the first sub-information, a first quantity of PDU Sets received by the terminal from a higher layer and belonging to the target object or a second quantity of PDU Sets to be sent by the target object in the uplink transmission direction;
obtaining, based on the second sub-information, a third quantity of PDU Sets that are not successfully transmitted by the target object in the uplink transmission direction;
determining a ratio of the third quantity to the first quantity as the PSER of the target object in the uplink transmission direction, or determining a ratio of the third quantity to the second quantity as the PSER of the target object in the uplink transmission direction.

55. The apparatus according to claim 50, wherein the first receiving unit is further configured to:
receive a UAI message and/or a PDCP control PDU sent by the terminal, wherein the UAI message and/or the PDCP control PDU carries the assistance information.

56. The apparatus according to claim 50, wherein the assistance information further comprises third information, and the third information comprises at least one of the following:
a packet error rate (PER) of the target object in the uplink transmission direction;
a fourth quantity of PDCP PDUs to be sent by the target object in the uplink transmission direction;
a reason why the target object fails to successfully transmit the PDCP PDU in the uplink transmission direction, wherein the reason comprises at least one of the following:
that the PDCP PDU has been transmitted but transmission fails;
that expiration of a PDCP discard timer corresponding to another PDU in a PDU set to which the PDCP PDU belongs causes the PDCP PDU to be discarded;
that expiration of a PDCP Set discard timer corresponding to the PDU set to which the PDCP PDU belongs causes the PDCP PDU to be discarded.

57. The apparatus according to claim 56, further comprising:
a second obtaining unit, configured to obtain, based on the third information, a fourth quantity of PDCP PDUs to be sent by the target object in the uplink transmission direction, a fifth quantity of PDCP PDUs that have been transmitted but transmission fails;
determine a ratio of the fifth quantity to the fourth quantity as the PER of the target object in the uplink transmission direction.

58. The apparatus according to claim 50, further comprising:
an adjusting unit, configured to adjust, based on the assistance information, a reordering window of an RLC entity corresponding to the target object.

59. The apparatus according to any one of claims 50 to 58, wherein the assistance information is data collected by the terminal for the target object within a preset time period.

60. The apparatus according to claim 59, further comprising:
a first sending unit, configured to send first configuration information to the terminal, wherein the first configuration information is used to configure the preset time period.

61. A computer-readable storage medium, wherein the computer-readable storage medium stores a computer program, and when the computer program is executed by a processor, the steps of the information sending method according to any one of claims 1 to 9 are implemented, or the steps of the information receiving method according to any one of claims 10 to 20 are implemented.
